# EUROPEAN PATENT SPECIFICATION

(11) **EP 2 799 613 B1**
(45) Date of publication and mention of the grant of the patent: **27.04.2016**
(21) Application number: 14166465.6
(22) Date of filing: 29.04.2014
(51) Int. Cl.: D06F 58/20, D06F 58/02, D06F 58/24

(54) **Clothes treating apparatus with heat recovery device**
Vorrichtung zur Behandlung von Kleidungsstücken mit Wärmerückgewinnungsvorrichtung
Appareil de traitement pour vêtements avec dispositif de récupération de chaleur

(30) Priority: 30.04.2013 KR 20130048613
(43) Date of publication of application: 05.11.2014
(73) Proprietor: LG Electronics Inc., Seoul 150-721 (KR)
(72) Inventor: Heo, Seonil, 153-802 Seoul (KR); Kim, Myoungjong, 153-802 Seoul (KR); Lee, Junseok, 153-802 Seoul (KR)
(74) Representative: Vossius & Partner Patentanwälte Rechtsanwälte mbB

(56) References cited:
- EP-A1- 2 270 274
- EP-A1- 2 395 145
- EP-A1- 2 471 998
- EP-A2- 1 426 480

## Description

The present disclosure relates to a clothes treating apparatus with a heat recovery device, and more particularly, to a clothes treating apparatus having a unit for utilizing thermal energy of hot air discharged from a drum.

In general, a clothes treating apparatus having a drying function, such as a dryer, is an apparatus for blowing hot air generated by a heater to the interior of a drum to absorb moisture of a target to be dried to perform drying on the target. A clothes treating apparatus is classified into an exhaust-type dryer and a circulation-type dryer depending on a method of processing moist air generated when a target is dried by absorbing moisture thereof.

The exhaust-type dryer uses a method of discharging moist air from a drum to the outside, and to this end, the exhaust-type dryer requires an exhaust duct for discharging high temperature moist air containing moisture evaporated within a drum to the outside. In this case, in a case in which a gas is used as a heat source, carbon monoxide, or the like, a combustion product, is also discharged together, and thus, the exhaust duct needs to be installed extendedly to reach an outdoor area. Meanwhile, a circulation-type dryer uses a method of condensing moist air discharged from a drum by a heat-exchanger to remove moisture, and transferring moisture-removed dry air to the drum to re-circulate air.

As for a configuration of a circulation-type clothes dryer, a circulation-type clothes dryer includes a body, a drum rotatably installed within the drum, a circulation duct having both ends connected to the drum to form a flow path along which air is circulated, and a heater installed within the circulation duct to heat air, a blowing fan forcibly circulating air, and the like. The circulation-type clothes dryer further includes a heat-exchanger or a condenser removing moisture included in air discharged from the drum.

The condenser has conditions appropriate for heat-exchanging air or a coolant introduced from the outside of a dryer with air discharged from a drum to reduce a temperature and humidity of exhaust air sufficient to be re-supplied to the interior of the drum. As the condenser, a water cooling-type condenser using a coolant supplied from an external water source and an air cooling-type condenser using ambient air. In case of using an air cooling-type heat-exchanger, cooling air heated through heat exchanging with exhaust air is discharged to the outside of a body.

Meanwhile, in a clothes treating apparatus having the foregoing function, in order to reduce energy consumed during a drying process, it is required for thermal energy generated by a heater to be used only for drying clothes as possible. To this end, in the related art, a heat pump is used to heat hot air supplied to a drum with thermal energy of air discharged from the drum, or a operation of a drum is controlled to allow hot air to come into contact with clothes evenly during a dry process.

However, in a dryer using an air cooling-type condenser, discharged cooling air also has a temperature higher than room temperature, so it may be utilized, but since the discharged cooling air has a temperature very lower than that of hot air supplied to the drum, efficiency improvement is low.

EP 2 270 274 (A1) and EP 2 471 998 (A1) generally relate to the field of household appliances for laundry and garments treatment, and in particular, to appliances for drying laundry, such as laundry dryers and combined washers/dryers.

Therefore, an aspect of the detailed description is to provide a clothes treating apparatus, in particular a circulation-type clothes treating apparatus, capable of reducing an amount of energy consumption using thermal energy of cooling air having a high temperature discharged to the outside of a body in a circulation-type clothes treating apparatus.

To achieve these and other advantages and in accordance with the purpose of this specification, as embodied and broadly described herein, a clothes treating apparatus includes:
a cabinet; a drum rotatably installed within the cabinet; a circulation duct configured to form a circulation flow path to transfer exhaust air discharged from the drum to the drum; a condenser configured to allow the exhaust air and cooling air introduced from the outside of the cabinet to be heat-exchanged; a blowing duct configured to guide the cooling air toward the condenser; and a blowing fan allowing ambient air to be introduced to the interior of the cooling flow path therethrough, wherein a discharge opening is formed to discharge cooling air, which has passed through the condenser, to the interior of the cabinet, and a rotational shaft of the drum is disposed between the discharge opening and the blowing fan.

According to an aspect of the present disclosure, unlike the related art in which cooling air is heat-exchanged with the exhaust air and discharged to the outside of the cabinet, the cooling air heat exchanged with the exhaust air is discharged to the interior of the cabinet to heat the drum or increase an internal temperature of the cabinet. Thus, lowering of a temperature of the drum is minimized by using thermal energy of cooling air, and by forming an insulating layer within the cabinet, loss of thermal energy to the outside of the cabinet may be minimized. Here, since the discharge opening of cooling air is disposed in the opposite side of the blowing fan based on the rotational shaft of the drum, discharged cooling air is directly supplied to the drum, rather than to the blowing fan or the motor provided in the blowing fan, enhancing energy usage efficiency.

Here, the entirety of cooling air which has passed through the condenser may be discharged through the discharge opening, or only a partial amount of cooling air may be discharged through the discharge opening and the remaining amount of cooling air may be directly discharged to the outside of the cabinet.

Here, the cooling air discharged from the discharge opening is discharged toward the drum.

Here, the condenser is installed on the bottom surface of the cabinet.

Also, an air vent for discharging discharged cooling air may be formed in the cabinet.

To achieve these and other advantages and in accordance with the purpose of this specification, as embodied and broadly described herein, a clothes treating apparatus includes a cabinet; a drum rotatably installed within the cabinet; a base installed on a bottom surface of the cabinet and forming a circulation flow path transmitting air within the drum discharged from the drum to the drum and a cooling flow path crossing the circulation flow path; a condenser installed at an intersection between the circulation flow path and the cooling flow path and allowing cooling air and exhaust air to be heat-exchanged; and a blowing fan allowing cooling air to be introduced to the interior of the cooling flow path therethrough, wherein a discharge opening discharging cooling air, which has passed through the condenser on the cooling flow path, to the interior of the cabinet, and a rotational shaft of the drum is disposed between the discharge opening and the blowing fan.

The circulation flow path and the cooling flow path may be formed by installing separate ducts, and in the aspect of the present disclosure, the cooling flow path and the circulation flow path are formed by using the case disposed in a lower surface of the clothes treating apparatus.

Here, the clothes treating apparatus may further include: a base cover installed above the base and forming at least portions of the cooling flow path and the circulation flow path. Here, the discharge opening may be formed in the base cover.

Also, the clothes treating apparatus may further include: a guide member discharged in the discharge opening to guide discharged cooling air. Here, the guide member may include: a fastening portion fastened to an outer circumferential portion of the discharge opening; and a discharge guide portion configured to determine a direction in which cooling air is discharged.

In this case, the discharge guide portion may be formed to allow cooling air to be discharged toward the drum or may be formed to allow cooling air to be discharged along a surface of the base cover.

Also, the guide member may include a hook portion formed in one end portion thereof and a hook coupling portion formed near the discharge opening.

According to exemplary embodiments of the present disclosure, since cooling air is heat-exchanged and subsequently discharged to the interior of a cabinet, lowering of a temperature of the interior of the cabinet and a drum may be minimized, reducing energy consumption. Also, since cooling air is positioned in the opposite side of a blowing fan, majority of thermal energy of discharged cooling air may be transmitted to the drum, heat of the drum may be effectively reserved or may be insulated from ambient air.

Also, since discharged cooling air may heat the drum or the interior of the cabinet and subsequently discharged to the outside of the cabinet, a temperature difference between the discharged cooling air and room temperature may be reduced, compared to a case in which discharged cooling air is directly discharged to the outside of the cabinet.

Further scope of applicability of the present application will become more apparent from the detailed description given hereinafter. However, it should be understood that the detailed description and specific examples, while indicating preferred embodiments of the invention, are given by way of illustration only, since various changes and modifications within the scope of the invention will become apparent to those skilled in the art from the detailed description.

The accompanying drawings, which are included to provide a further understanding of the invention and are incorporated in and constitute a part of this specification, illustrate exemplary embodiments and together with the description serve to explain the principles of the invention.

In the drawings:
FIG. 1 is a perspective view illustrating a first embodiment of a clothes treating apparatus according to the present disclosure.
FIG. 2 is a perspective view illustrating a state in which a side panel is removed in the embodiment illustrated in FIG. 1.
FIG. 3 is a perspective view illustrating a base provided in the embodiment illustrated in FIG. 1.
FIG. 4 is a perspective view illustrating a base cover provided in the embodiment illustrated in FIG. 1.
FIG. 5 is a view illustrating an internal structure illustrating an air flow in the first embodiment.
FIG. 6 is a perspective view illustrating a discharge guide provided in a second embodiment of a clothes treating apparatus according to the present disclosure.
FIG. 7 is a perspective view illustrating a state in which a discharge guide illustrated in FIG. 6 is installed in a base cover.
FIG. 8 is a perspective view illustrating a modified example of the discharge guide illustrated in FIG. 6.
FIG. 9 is a perspective view illustrating a state in which the discharge guide illustrated in FIG. 8 is installed in a base cover.

Description will now be given in detail of the exemplary embodiments, with reference to the accompanying drawings. For the sake of brief description with reference to the drawings, the same or equivalent components will be provided with the same reference numbers, and description thereof will not be repeated.

Hereinafter, an embodiment of a clothes treating apparatus according to the present disclosure will be described in detail with reference to the accompanying drawings.

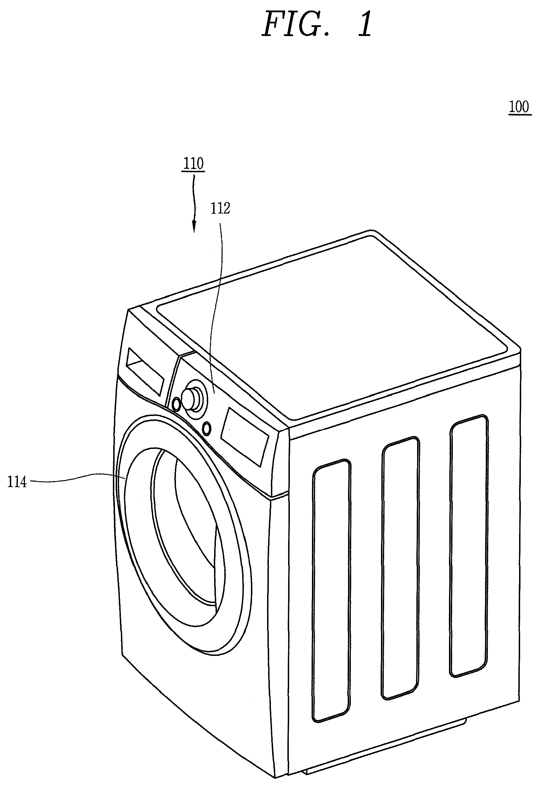

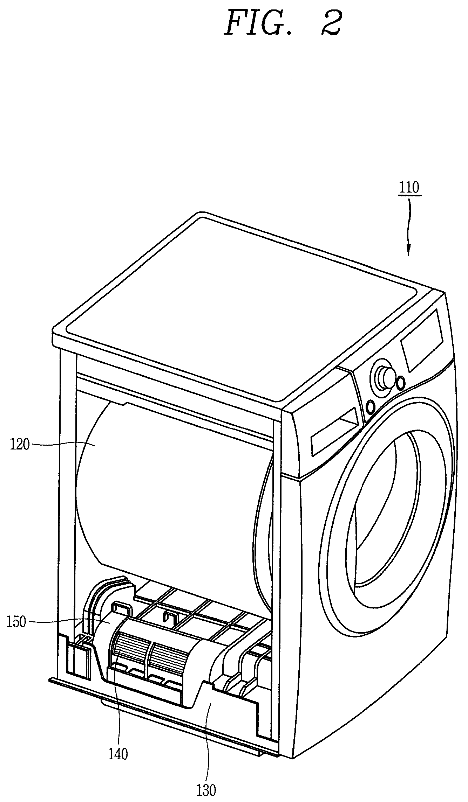

FIG. 1 is a perspective view illustrating a first embodiment of a clothes treating apparatus according to the present disclosure, and FIG. 2 is a perspective view illustrating a state in which a side panel is removed in the embodiment illustrated in FIG. 1. Referring to FIGS. 1 and 2, a first embodiment is a clothes dryer 100 including a cabinet 110 constituting the exterior and a drum 120 rotatably provided within the cabinet 110.

A control panel 112 is provided in an upper portion of a front surface of the cabinet 110 to control functions of the dryer and display an operational state. A door 114 is installed below the control panel 112 to open and close a feeding entrance communicating with the drum 120.

A base 130 is installed on the bottom within the cabinet 110. The base 130 provides an area in which various components are installed within the cabinet 110, and forms a circulation path and a cooling path as described hereinafter.

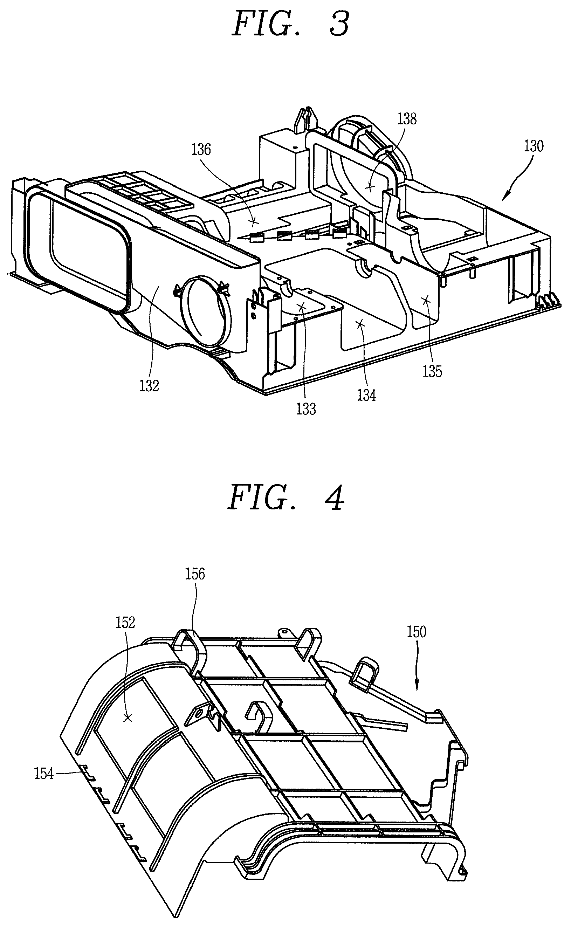

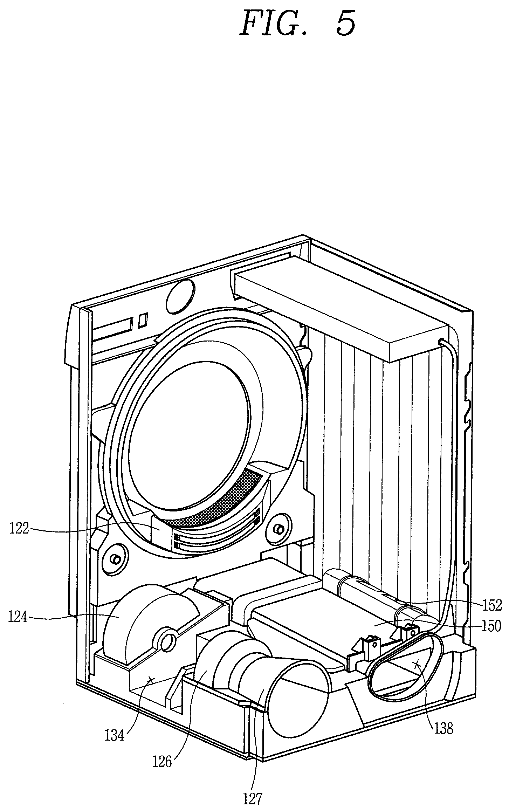

Hereinafter, an internal structure of the first embodiment will be described. FIG. 3 is a perspective view illustrating a base 130 provided in the first embodiment illustrated in FIG. 1, FIG. 4 is a perspective view illustrating a base cover provided in the embodiment illustrated in FIG. 1, and FIG. 5 is a view illustrating an internal structure illustrating an air flow in the first embodiment. Referring to FIGS. 3 through 5, a lint filter 122 is installed in the vicinity of the door 114. The lint filter 122 serves to remove lint included in air having a high temperature discharged from the drum 120 and first guide exhaust air toward a circulation flow path as described hereinafter.

The base 130 includes a filter installation part 132 in which the lint filter 122 is installed. A fan installation portion 133 is formed on a rear surface of the filter installation part 132, and a circulation blowing fan 124 is disposed in the fan installation portion 133 and sucks air within the drum 120 to guide the air toward the circulation flow path. A circulation flow path part 136 is formed on the side of the fan installation portion 133 and forms a circulation flow path along which exhaust air discharged from the circulation blowing fan 124 is re-supplied to the interior of the drum 120.

As illustrated in FIG. 2, a heat exchanger 140 as a condensing unit is installed within the circulation flow path part 136, and exhaust air introduced to the circulation flow path part 136 passes through the heat exchanger 140 and is subsequently re-supplied to the interior of the drum 120. Meanwhile, an upper surface of the circulation flow part 136 is opened, and a base cover 150 is installed in the open upper surface to form a circulation flow path. The base cover will be described hereinafter.

Meanwhile, apart from the circulation blowing fan 124, a cooling blowing fan 126 is installed in the base 130 to suck cooling air from the outside of the cabinet to supply the same toward the heat exchanger 140. A hood 127 is installed in an inflow side of the cooling blowing fan 126 to allow ambient air outside of the cabinet to be introduced. The hood 127 is fixedly installed in the base 130. The cooling blowing fan 126 is disposed in a cooling fan installation part 135 provided in the base 130.

The cooling fan installation part 135 forms a portion of a cooling flow path along which cooling air is introduced, and cooling air discharged from the cooling blowing fan 126 moves toward the circulation flow path part 136. Thus, the heat exchanger 140 is disposed in an intersection between the circulation flow path and the cooling flow path to allow exhaust air and cooling air to be heat-exchanged. Here, the exhaust air and the cooling air transmit heat through a surface of the heat exchanger 140, but may not be mixed with each other or may not be in contact with each other. Meanwhile, a space denoted by reference numeral 134 is a space for installation of a driving motor (not shown) for driving the circulation blowing fan 124 and the cooling blowing fan 126.

Referring to FIG. 4, the base cover 150 is formed to cover an upper portion of the circulation flow path part 136, and one end portion (the right side based on FIG. 4) of the base cover 150 is connected to a discharge opening of the cooling blowing fan 126 and the other end thereof covers the side of the heat exchanger 140. Two discharge openings 152 are formed to be adjacent to the other end portion of the base cover 150. The discharge openings 152 serve to discharge cooling air, which has passed though the heat exchanger 140, to the interior of the cabinet, and the discharged cooling air comes into contact with the drum 120 positioned above the discharge openings 152.

Here, a partial amount of the cooling air is discharged through the discharge openings 152, and the other remaining partial amount of the cooling air is directly discharged to the outside of the cabinet 110. To this end, an auxiliary discharge portion 131 is formed in a lower portion of the front side of the base 130. The auxiliary discharge portion 131 forms a discharge opening allowing a partial amount of the cooling air to be discharged therethrough together with a bottom surface of the cabinet 110.

A ring 156 is formed in an upper surface of the base cover 150 in order to fix various hoses, wirings, and the like, disposed within the cabinet 110.

Hereinafter, an operation of the first embodiment will be described.

When a dry operation starts, hot air having a high temperature is supplied to the interior of the drum by a heater (not shown), and the supplied hot air is brought into contact with the laundry within the drum 120 to dry the laundry. Thereafter, exhaust air having a high temperature and containing moisture is discharged from the drum 120 and introduced into the lint filter 122. Such a flow of exhaust air is incited by the circulation blowing fan 124 as mentioned above.

Exhaust air, which has passed through the lint filter 122, passes through the circulation blowing fan 124 and is introduced to the circulation flow path formed by the circulation flow path part 136 and the base cover 150. Meanwhile, as mentioned above, ambient air is introduced to the cooling blowing fan 126 through the hood 127 and transferred to the heat exchanger 140. Thus, as hot and humid exhaust air passes through the heat exchanger 140, temperature and humidity of the air may be lowered, and the air having low temperature and humidity may be heated by the heater and re-supplied to the drum 120. In addition, cooling air is increased in temperature due to thermal energy transmitted from the exhaust air, and the cooling air having the increased temperature is discharged to the interior of the cabinet 110 through the discharge opening.

In this case, the cooling air moves to the drum 120 above the discharge opening. In the foregoing embodiment, a surface temperature of the drum is approximately 40°C, and the discharged cooling air has a temperature of approximately 50°C. Thus, when the cooling air comes into contact with the drum, the surface of the drum 120 may be heated, and accordingly, energy consumption required for generating hot air may be reduced. In addition, since heated cooling air remains within the cabinet 110, the interior of the cabinet 110 may be maintained at a high temperature. Thus, heat loss through a surface of the cabinet 110 may be minimized. Namely, the cooling air serves to insulate the drum or reserve heat of the drum 120.

Here, the discharge opening is positioned in the opposite side of the motor based on a rotational shaft of the drum 120 as a reference. Namely, the rotational shaft of the drum 120 is positioned between the discharge opening and the motor when viewed from the top of the cabinet 110. Thus, discharged cooling air may transmit heat to the drum 120 preferentially over other components, whereby the effect of heating of the drum 120 and reserving heat of the drum 120 may be maximized.

Meanwhile, cooling air discharged to the interior of the cabinet 110 may be discharged to the outside through an air vent formed in a rear surface of the cabinet 110.

According to circumstances, a guide member may be installed in the discharge opening to set a direction of discharged cooling air to a desired direction.

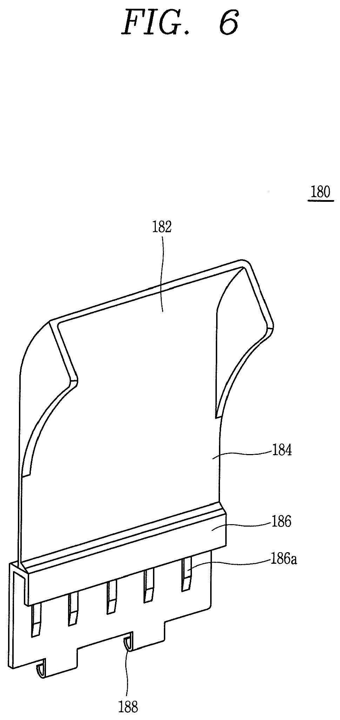

FIG. 6 is a perspective view illustrating an example of the guide member. Referring to FIG. 6, a guide member 180 includes a discharge guide portion 182 bent to have an angle corresponding to a direction in which cooling air is discharged, and a stop portion 186 to be fastened to the discharge opening is formed near a lower end portion of a body portion 184. The stop portion 186 includes a recess allowing an outer circumferential portion of the opening to be inserted therein, and for stable fastening, a plurality of bead portions 186a are formed below the stop portion 186.

The bead portion 186a presses portions around the discharge opening to prevent the stop portion 186 from being easily released.

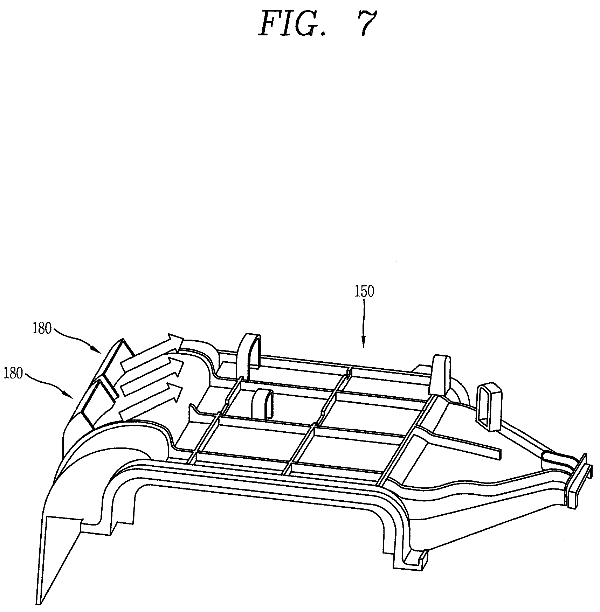

Also, hooks 188 are formed in a lower end of the body portion 184. The hooks 188 are inserted into hook coupling portions 154 illustrated in FIG. 4 to firmly fasten the guide member 180 together with the stop portion 186. FIG. 7 is a perspective view illustrating a state in which the guide member 180 is fastened to the base cover 150. In FIG. 7, the discharge guide portion is disposed at an angle of approximately 45 degrees with respect to the bottom surface of the cabinet 110, and thus, discharged cooling air is discharged in the direction indicated by the arrows.

Thus, since the cooling air is discharged toward the drum, thermal energy of the cooling air may be transmitted to the drum as much as possible.

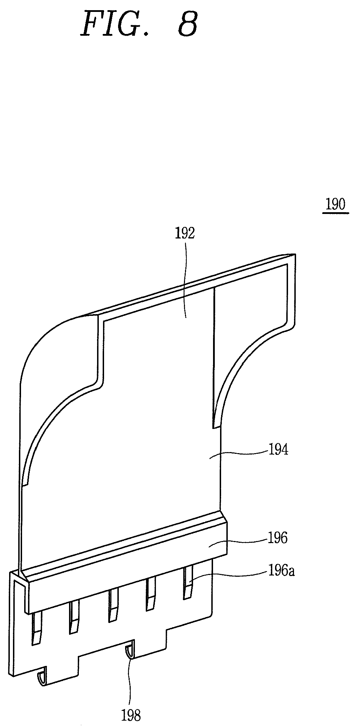

Meanwhile, a discharge angle of the discharge guide portion may be randomly set. Namely, a guide member 190 illustrated in FIG. 8 is formed to have a discharge guide portion 192 disposed in a direction substantially perpendicular to the body portion 194. The guide member 190 illustrated in FIG. 8 also includes a hook portion 196, bead portions 196a, and hook portions 198.

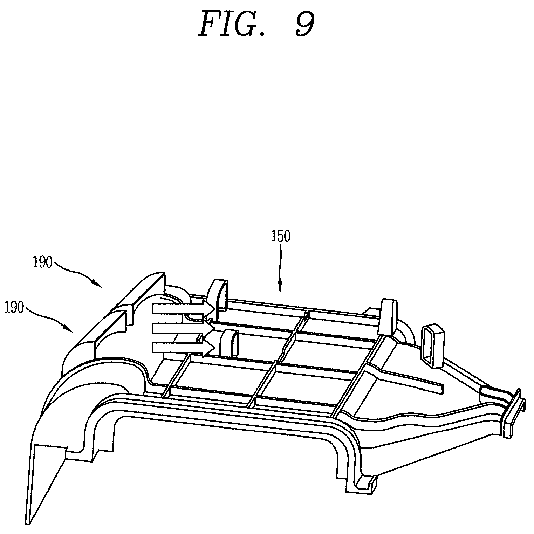

Referring to FIG. 9, cooling air is discharged substantially parallel along a surface of the base cover. In general, hot air rises due to a density difference, cooling air discharged in parallel moves to rise, and thus, it may evenly come into contact with a lower portion of the drum. Thus, the drum may be evenly heated.

The foregoing embodiments and advantages are merely exemplary and are not to be considered as limiting the present disclosure. The present teachings can be readily applied to other types of apparatuses. This description is intended to be illustrative, and not to limit the scope of the claims. Many alternatives, modifications, and variations will be apparent to those skilled in the art. The features, structures, methods, and other characteristics of the exemplary embodiments described herein may be combined in various ways to obtain additional and/or alternative exemplary embodiments.

## Claims

1. A clothes treating apparatus comprising:
a cabinet (110);
a drum (120) rotatably installed within the cabinet (110);
a circulation flow path configured to re-supply exhaust air discharged from the drum (120) to the drum (120);
a condenser installed on the bottom surface of the cabinet (110), the condenser configured to allow the exhaust air and cooling air introduced from the outside of the cabinet (110) to be heat-exchanged under the drum (120);
a cooling flow path configured to guide the cooling air toward the condenser; and
a blowing fan (124) allowing ambient air to be introduced to the interior of the cooling flow path therethrough,
wherein a discharge opening (152) is positioned under the drum (120) and discharges cooling air, which has passed through the condenser, to the interior of the cabinet (110), directly toward a bottom surface of the drum (120), wherein a rotational shaft of the drum (120) is disposed between the discharge opening (152) and the blowing fan (124) when viewed from the top of the cabinet (110).

2. The clothes treating apparatus of claim 1 , wherein an air vent for discharging discharged cooling air is formed in the cabinet (110).

3. The clothes treating apparatus of any one of the preceding claims, wherein a partial amount of cooling air which has passed through the condenser is discharged to the interior of the cabinet (110) through the discharge opening (152), and the remaining amount of cooling air is directly discharged to the outside of the cabinet (110).

4. The clothes treating apparatus of any one of the preceding claims, further comprising:
a base (130) installed on a bottom surface of the cabinet (110) and forming the circulation flow path and a cooling flow path intersecting with the circulation flow path.

5. The clothes treating apparatus of claim 4, further comprising:
a base cover (150) installed above the base (130) and forming at least portions of the cooling flow path and the circulation flow path.

6. The clothes treating apparatus of claim 5, wherein the discharge opening (152) is formed in the base cover (150).

7. The clothes treating apparatus of claim 5 or 6, further comprising:
a guide member (180, 190) installed in the discharge opening (152) to guide discharged cooling air.

8. The clothes treating apparatus of claim 7, wherein the guide member (180, 190) comprises:
a fastening portion fastened to an outer circumferential portion of the discharge opening (152); and
a discharge guide portion (182, 192) configured to determine a direction in which cooling air is discharged.

9. The clothes treating apparatus of claim 8, wherein the discharge guide portion (182, 192) is formed to allow cooling air to be discharged toward the drum (120).

10. The clothes treating apparatus of claim 8, wherein the discharge guide portion (182, 192) is formed to allow cooling air to be discharged along a surface of the base cover (150).

11. The clothes treating apparatus of claim 8, 9, or 10, wherein the guide member (180, 190) includes a hook portion (188, 198) formed in one end portion thereof and being insertable into a hook coupling portion (154) formed near the discharge opening (152).

12. The clothes treating apparatus of claims 4-11, wherein an auxiliary discharge portion (131) communicating with the cooling flow path and discharging a partial amount of cooling air to the outside of the cabinet (110) is formed on a front surface of the base (130).

## Patentansprüche

1. Vorrichtung zur Behandlung von Kleidungsstücken mit:
einem Schrank (110),
einer im Schrank (110) drehbar angeordneten Trommel (120),
einem Umlaufströmungspfad, der dazu ausgelegt ist, aus der Trommel (120) abgeführte Abluft in die Trommel (120) zurückzuführen;
einem an der Unterseite des Schranks (110) angebrachten Kondensator, mit dessen Hilfe von außerhalb des Schranks (110) zugeführte Abluft und Kühlluft unter der Trommel (120) wärmegetauscht werden können,
einem Kühlströmungspfad, der dazu ausgebildet ist, dem Kondensator Kühlluft zuzuführen und
einem blasenden Lüfter (124), mit dessen Hilfe dem Inneren des Kühlströmungspfads Umgebungsluft zugeführt werden kann,
wobei eine unter der Trommel (120) vorgesehene Abführöffnung (152) Kühlluft, die den Kondensator durchlaufen hat, in das Innere des Schranks (110) abführt, direkt zu einer Unterseite der Trommel (120), wobei von der Oberseite des Schranks (110) aus gesehen eine Drehwelle der Trommel (120) zwischen der Abführöffnung (152) und dem blasenden Lüfter (124) angebracht ist.

2. Vorrichtung zur Behandlung von Kleidungsstücken nach Anspruch 1, wobei im Schrank (110) ein Abluftventil zum Abführen der Kühlluft ausgebildet ist.

3. Vorrichtung zur Behandlung von Kleidungsstücken nach einem der vorhergehenden Ansprüche, wobei eine Teilmenge der Kühlluft, die den Kondensator durchlaufen hat, durch die Abführöffnung (152) ins Innere des Schranks (110) abgeführt wird und die restliche Kühlluftmenge direkt aus dem Schrank (110) abgeführt wird.

4. Vorrichtung zur Behandlung von Kleidungsstücken nach einem der vorhergehenden Ansprüche, ferner mit:
einer an der Unterseite des Schranks (110) angebrachten Grundplatte (130), die einen Umlaufströmungspfad und einen Kühlströmungspfad, der sich mit dem Umlauf-Strömungspfad schneidet, bildet.

5. Vorrichtung zur Behandlung von Kleidungsstücken nach Anspruch 4, ferner mit:
einer über der Grundplatte (130) angebrachten Grundplattenabdeckung (150), die zumindest einen Teil des Kühlströmungspfades und des Umlaufströmungspfades bildet.

6. Vorrichtung zur Behandlung von Kleidungsstücken nach Anspruch 5, wobei die Abführöffnung (152) in der Grundplattenabdeckung (150) ausgebildet ist.

7. Vorrichtung zur Behandlung von Kleidungsstücken nach Anspruch 5 oder 6, ferner mit:
einem in der Abführöffnung (152) angebrachten Führungselement (180, 190) zum Führen abgeführter Kühlluft.

8. Vorrichtung zur Behandlung von Kleidungsstücken nach Anspruch 7, wobei das Führungselement (180, 190) aufweist:
einen an einem Außenumfangsabschnitt der Abführöffnung (152) befestigten Befestigungsabschnitt und
einen Abführ-Führungsabschnitt (182, 192) zum Bestimmen einer Richtung, in die die Kühlluft abgeführt wird.

9. Vorrichtung zur Behandlung von Kleidungsstücken nach Anspruch 8, wobei der Abführ-Führungsabschnitt (182, 192) so ausgebildet ist, dass Kühlluft zur Trommel (120) abgeführt werden kann.

10. Vorrichtung zur Behandlung von Kleidungsstücken nach Anspruch 8, wobei der Abführ-Führungsabschnitt (182, 192) so ausgebildet ist, dass Kühlluft entlang einer Oberfläche der Grundplattenabdeckung (150) abgeführt werden kann.

11. Vorrichtung zur Behandlung von Kleidungsstücken nach Anspruch 8, 9 oder 10, wobei das Führungselement (180, 190) einen in dessen Endabschnitt ausgebildeten Hakenabschnitt (188, 198) umfasst, der in einen nahe der Abführöffnung (152) ausgebildeten Hakenkupplungsabschnitt (154) eingesteckt werden kann.

12. Vorrichtung zur Behandlung von Kleidungsstücken nach den Ansprüchen 4 bis 11, wobei auf einer Vorderseite der Grundplatte (130) ein mit dem Kühlströmungspfad verbundener Hilfsabführabschnitt (131) ausgebildet ist, der eine Teilmenge der Kühlluft aus dem Schrank (110) hinaus abführt.

## Revendications

1. Appareil de traitement de vêtements comprenant :
une carcasse (110) ;
un tambour (120) installé en rotation à l'intérieur de la carcasse (110) ;
une trajectoire d'écoulement de circulation configurée pour ramener l'air d'échappement déchargé par le tambour (120), au tambour (120) ;
un condenseur installé sur la surface inférieure de la carcasse (110), le condenseur étant configuré pour permettre à l'air d'échappement et à l'air de refroidissement introduits par l'extérieur de la carcasse (110) d'être thermiquement échangés sous le tambour (120) ;
une trajectoire d'écoulement de refroidissement configurée pour guider l'air de refroidissement dans le condenseur ; et
un ventilateur de soufflage (124) permettant à l'air ambiant d'être introduit à l'intérieur de la trajectoire d'écoulement de refroidissement,
dans lequel une ouverture de décharge (152) est positionnée sous le tambour (120) et décharge l'air de refroidissement, qui est passé par le condenseur, jusqu'à l'intérieur de la carcasse (110), directement vers la surface inférieure du tambour (120), dans lequel un arbre rotatif du tambour (120) est disposé entre l'ouverture de décharge (152) et le ventilateur de soufflage (124), lorsqu'il est observé depuis le dessus de la carcasse (110).

2. Appareil de traitement de vêtements selon la revendication 1, dans lequel un évent d'air pour décharger l'air de refroidissement déchargé est formé dans la carcasse (110).

3. Appareil de traitement de vêtements selon l'une quelconque des revendications précédentes, dans lequel une quantité partielle d'air de refroidissement qui est passée par le condenseur, est déchargée à l'intérieur de la carcasse (110) par l'ouverture de décharge (152), et la quantité résiduelle d'air de refroidissement est directement déchargée à l'extérieur de la carcasse (110).

4. Appareil de traitement de vêtements selon l'une quelconque des revendications précédentes, comprenant en outre :
une base (130) installée sur une surface inférieure de la carcasse (110) et formant une trajectoire d'écoulement de circulation et une trajectoire d'écoulement de refroidissement coupant la trajectoire d'écoulement de circulation.

5. Appareil de traitement de vêtements selon la revendication 4, comprenant en outre :
un couvercle de base (150) installé au-dessus de la base (130) et formant au moins des parties de la trajectoire d'écoulement de refroidissement et de la trajectoire d'écoulement de circulation.

6. Appareil de traitement de vêtements selon la revendication 5, dans lequel l'ouverture de décharge (152) est formée dans le couvercle de base (150).

7. Appareil de traitement de vêtements selon la revendication 5 ou 6, comprenant en outre :
un élément de guidage (180, 190) installé dans l'ouverture de décharge (152) pour guider l'air de refroidissement déchargé.

8. Appareil de traitement de vêtements selon la revendication 7, dans lequel l'élément de guidage (180, 190) comprend :
une partie de fixation fixée sur une partie circonférentielle externe de l'ouverture de décharge (152) ; et
une partie de guidage de décharge (182, 192) configurée pour déterminer une direction dans laquelle l'air de refroidissement est déchargé.

9. Appareil de traitement de vêtements selon la revendication 8, dans lequel la partie de guidage de décharge (182, 192) est formée pour permettre de décharger l'air de refroidissement vers le tambour (120).

10. Appareil de traitement de vêtements selon la revendication 8, dans lequel la partie de guidage de décharge (182, 192) est formée pour permettre de décharger l'air de refroidissement le long d'une surface du couvercle de base (150).

11. Appareil de traitement de vêtements selon la revendication 8, 9 ou 10, dans lequel l'élément de guidage (180, 190) comprend une partie de crochet (188, 198) formée dans sa partie d'extrémité et pouvant être insérée dans une partie de couplage de crochet (154) formée à proximité de l'ouverture de décharge (152).

12. Appareil de traitement de vêtements selon les revendications 4 à 11, dans lequel une partie de décharge auxiliaire (131) communiquant avec la trajectoire d'écoulement de refroidissement et déchargeant une quantité partielle d'air de refroidissement à l'extérieur de la carcasse (110) et formée sur une surface avant de la base (130).
